# EUROPÄISCHE PATENTSCHRIFT

(11) **EP 2 726 730 B1**
(45) Veröffentlichungstag und Bekanntmachung des Hinweises auf die Patenterteilung: **17.08.2016**
(21) Anmeldenummer: 12721834.5
(22) Anmeldetag: 15.05.2012
(51) Int. Cl.: F02M 61/16, F02M 51/00, F02M 63/00

(54) **EINSPRITZVENTIL SOWIE VERFAHREN ZUR HERSTELLUNG EINES EINSPRITZVENTILS**
INJECTION VALVE, AND METHOD FOR PRODUCING AN INJECTION VALVE
INJECTEUR ET PROCÉDÉ DE FABRICATION D'UN INJECTEUR

(30) Priorität: 29.06.2011 DE 102011078251
(43) Veröffentlichungstag der Anmeldung: 07.05.2014
(73) Patentinhaber: Robert Bosch GmbH, 70442 Stuttgart (DE)
(72) Erfinder: NAUMANN, Rainer, 96050 Bamberg (DE); BAYER, Johann, 96129 Strullendorf (DE)
(86) Internationale Anmeldenummer: PCT/EP2012/058993
(87) Internationale Veröffentlichungsnummer: WO 2013/000619

(56) Entgegenhaltungen:
- DE-A1- 10 108 464
- DE-A1-102006 036 106

## Beschreibung

### Stand der Technik

Die vorliegende Erfindung betrifft ein Kraftstoffeinspritzventil sowie ein Verfahren zur Herstellung eines derartigen Einspritzventils.

Einspritzventile sind in Verbindung mit Brennkraftmaschinen zur Einspritzung von Kraftstoff in unterschiedlichen Ausgestaltungen bekannt. Hierbei muss für jede unterschiedliche Brennkraftmaschine eine spezifische Auslegung eines Einspritzstrahls des Einspritzventils vorgenommen werden. Dies bedingt weiterhin, dass das Einspritzventil lagebezogen in die Brennkraftmaschine eingebaut werden muss. Diese Ausrichtung erfolgt bisher immer über Verdrehfixierungen, welche am Einspritzventil, meist am Stecker, angebracht sind und eine Lageausrichtung ermöglichen. Dabei ist allerdings der Zusammenbau des Einspritzventils sehr aufwändig, da die Ausrichtung des Ventilsitzes zum Steckereinbau während der Montage, z. B. mit Kamera oder indirekt an einer externen Ausrichtfläche als Übertragung der Lage erfolgt. Ein anderes Beispiel ist aus dem DE 10 2006 036 106 A1 bekannt.

Es wäre daher wünschenswert, ein Einspritzventil bereitzustellen, welches insbesondere eine einfachere und schnellere Montage ermöglicht.

Offenbarung der Erfindung Das erfindungsgemäße Einspritzventil mit den Merkmalen des Anspruchs 1 weist demgegenüber den Vorteil auf, dass es viel einfacher und schneller zusammenbaubar ist. Dabei können im Vergleich mit dem Stand der Technik die Herstellkosten für das erfindungsgemäße Einspritzventil reduziert werden. Dies wird erfindungsgemäß dadurch erreicht, dass das Einspritzventil an einem Ventileinsatz, welcher ein Ventilgehäuse aufweist, eine erste Einrichtung zum Ausrichten des Ventileinsatzes in einem Spritzwerkzeug aufweist. Ferner weist erfindungsgemäß die Kunststoffumspritzung eine zweite Einrichtung zum Ausrichten auf, welche eingerichtet ist, das Einspritzventil bei der Montage in einer Brennkraftmaschine auszurichten. Erfindungsgemäß kann somit je nach Brennkraftmaschine ein Spritzwerkzeug vorgesehen werden, wobei ein Ventileinsatz aufgrund der ersten Ausrichteinrichtung am Ventilgehäuse in ausgerichteter Weise im Spritzwerkzeug angeordnet ist. Anschließend wird eine Kunststoffumspritzung, insbesondere für den Stecker und gegebenenfalls weitere äußere Kunststoffteile, am Einspritzventil, eingespritzt. Dabei entsteht die zweite Einrichtung zum Ausrichten an der Kunststoffumspritzung, so dass aufgrund der vorherigen Ausrichtung des Ventileinsatzes im Spritzwerkzeug ein Strahlengang des Einspritzventils relativ zur zweiten Einrichtung zum Ausrichten an der Kunststoffumspritzung ausgerichtet ist. Somit ist eine feste Beziehung zwischen der zweiten Ausrichteinrichtung und dem Ventilsitz, und damit dem Strahlengang, hergestellt.So muss zwar wie bisher für jeden Typ von Brennkraftmaschine ein Spritzwerkzeug vorgesehen werden, allerdings kann dann der Zusammenbau des Einspritzventils deutlich vereinfacht werden. Zur Endmontage in der Brennkraftmaschine muss lediglich noch die bei der Montage aus dem Zylinderkopf vorstehende zweite Ausrichteinrichtung an einem Bauteil der Brennkraftmaschine, z.B. einem Rail, ausgerichtet und montiert, insbesondere geschweißt, werden. Somit kann erfindungsgemäß mit geringsten Kosten ein Bezugspunkt für die Ausrichtung an der Kunststoffumspritzung geschaffen werden, welcher je nach Brennkraftmaschine individuell ist, so dass für jede Brennkraftmaschine eine spezifische Strahlausrichtung des Einspritzventils möglich ist, wobei trotzdem gleichartige Ventileinsätze verwendet werden können, welche nur je nach Spritzwerkzeug in verschiedenen Positionen eingelegt werden.

Die Unteransprüche zeigen bevorzugte Weiterbildungen der Erfindung.

Vorzugsweise ist die erste Einrichtung zum Ausrichten an einem Endbereich des Ventileinsatzes benachbart zu einem Ventilsitz angeordnet. Hierdurch kann eine besonders kompakte Anordnung der Einrichtung zum Ausrichten erhalten werden.

Besonders bevorzugt umfasst die Einrichtung zum Ausrichten an einem Ventilgehäuse, wenigstens eine erste und eine zweite Fläche. Die Flächen sind einfach als Ausrichteinrichtungen herzustellen und ermöglichen ein schnelles Einlegen des Ventileinsatzes im Einspritzwerkzeug. Alternativ oder zusätzlich umfasst die Einrichtung zum Ausrichten vorstehende Rippen und/oder Nuten und/oder vorstehende Nasen.

Besonders bevorzugt sind die erste und zweite Fläche dabei zueinander parallel angeordnet. Alternativ sind die beiden Flächen zueinander in einem Winkel angeordnet, wobei besonders bevorzugt zwischen den beiden Flächen eine Übergangskante vorgesehen ist.

Ferner betrifft die vorliegende Erfindung ein Verfahren zur Herstellung eines Einspritzventils, wobei in einem ersten Schritt ein Ventileinsatz mit wenigstens einer ersten Einrichtung zum Ausrichten des Ventileinsatzes bereitgestellt wird. Anschließend wird der Ventileinsatz in ein Spritzwerkzeug eingeführt, wobei der Ventileinsatz mittels der ersten Ausrichteinheit im Spritzwerkzeug ausgerichtet wird. Dann erfolgt ein teilweises Umspritzen des Ventileinsatzes mit Kunststoff derart, dass die Kunststoffumspritzung eine zweite Einrichtung zum Ausrichten aufweist. Bei einer Montage des erfindungsgemäßen Einspritzventils wird dieses dann an der zweiten Ausrichtung zum Ausrichten, welche an der Kunststoffumspritzung vorgesehen ist, ausgerichtet. Somit wird während der Kunststoffumspritzung eine Beziehung zwischen der ersten Ausrichteinheit am Ventileinsatz und der gespritzten zweiten Ausrichteinheit an der Kunststoffumspritzung hergestellt, wodurch der Strahlengang des Einspritzventils bei einer durch die zweite Ausrichteinrichtung vorgegebenen Einbaurichtung definiert ist.

Die vorliegende Erfindung kann dabei sowohl bei selbstzündenden als auch bei fremdgezündeten Brennkraftmaschinen verwendet werden.

### Zeichnung

Nachfolgend wird unter Bezugnahme auf die begleitende Zeichnung ein bevorzugtes Ausführungsbeispiel der Erfindung unter Bezugnahme auf die begleitende Zeichnung im Detail beschrieben. In der Zeichnung ist:
- Figur 1: eine schematische Seitenansicht eines Einspritzventils gemäß einem bevorzugten Ausführungsbeispiel der Erfindung, und
- Figur 2: eine schematische Ansicht von vorn des Einspritzventils von Figur 1.

### Bevorzugte Ausführungsform der Erfindung

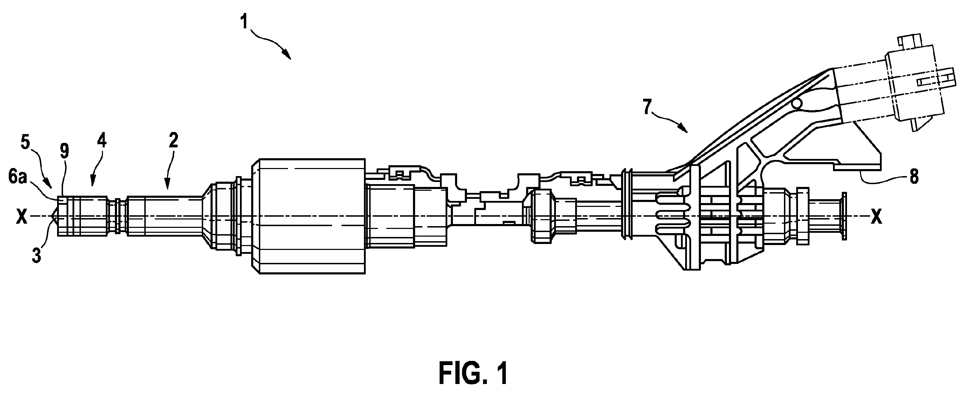

Figur 1 zeigt schematisch ein Einspritzventil 1 gemäß einem bevorzugten Ausführungsbeispiel der Erfindung. Das Einspritzventil 1 umfasst einen Ventileinsatz 2, welcher in bekannter Weise als Magnetventil oder Piezo-Ventil ausgebildet sein kann. An einem Ende des Ventileinsatzes 2 ist ein Ventilsitz 3 vorgesehen, an welchem eine Einspritzung von Kraftstoff ausgeführt wird.

Ferner umfasst das erfindungsgemäße Einspritzventil 1 eine Kunststoffumspritzung 7, welche in diesem Ausführungsbeispiel eine Steckerumspritzung ist.

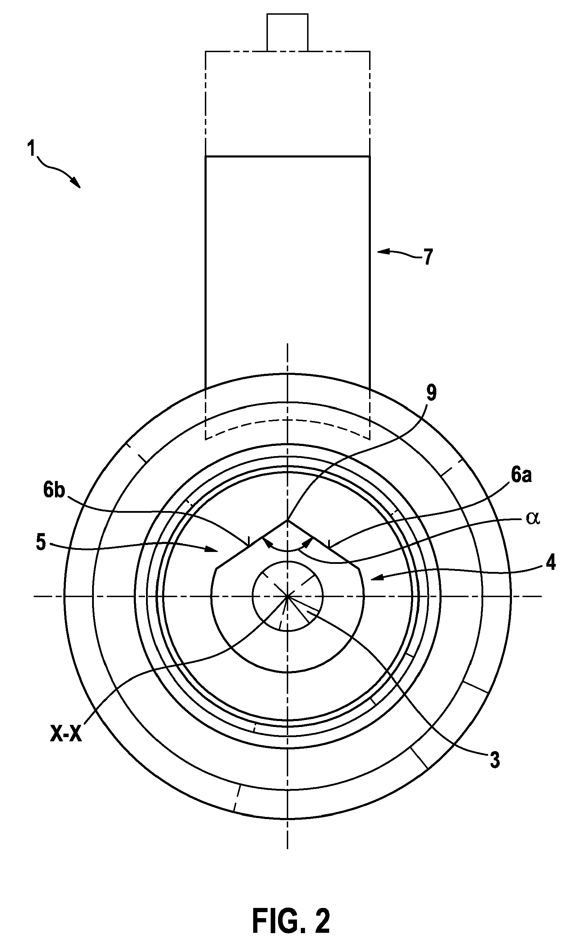

Wie insbesondere auch aus Figur 2 ersichtlich ist, weist der Ventileinsatz 2 ein Ventilgehäuse 4 auf, an dessen äußerer Seite benachbart zum Ventilsitz 3 eine Ausrichteinrichtung 5 vorgesehen ist. Die Ausrichteinrichtung 5 umfasst eine erste Fläche 6a und eine zweite Fläche 6b. Die beiden Flächen 6a, 6b sind in einem vorbestimmten Winkel α zueinander angeordnet und weisen dazwischen eine Übergangskante 9 auf. Weiterhin ist an der Kunststoffumspritzung 7 eine zweite Ausrichteinrichtung 8 in Form einer weiteren Fläche ausgebildet.

Erfindungsgemäß kann nun bei einer Herstellung des Einspritzventils 1 der Ventileinsatz 2 mittels der ersten Ausrichteinrichtung 5 in eine Spritzgussform eingelegt werden und die beiden Flächen 6a, 6b der Ausrichteinrichtung 5 stellen sicher, dass der Ventileinsatz 2 in der Spritzgussform in einer vorbestimmten Ausrichtung eingelegt ist. In einem nächsten Schritt wird dann die Kunststoffumspritzung 7 an den Ventileinsatz 2 angespritzt, wobei entsprechend der Form des Spritzgusswerkzeugs die zweite Ausrichteinrichtung 8 in Form der Fläche angespritzt wird. Somit kann durch den Spritzvorgang sichergestellt werden, dass die zweite Ausrichteinrichtung 8 relativ zum Ventileinsatz 2 ausgerichtet ist.

Somit kann erfindungsgemäß die Kunststoffumspritzung 7 lagerichtig an den Ventileinsatz 2 angespritzt werden, so dass im nachfolgenden Einbau des Einspritzventils in eine Brennkraftmaschine lediglich eine Ausrichtung an der zweiten Ausrichteinrichtung 8 der Kunststoffumspritzung 7 notwendig ist. Insbesondere kann erfindungsgemäß bei einem Zusammenbau des Einspritzventils eine aufwändige und langwierige Ausrichtung mittels Kamera vermieden werden. Dabei ist erfindungsgemäß kein zusätzliches Bauteils, nötig, lediglich müssen für jede Art von Brennkraftmaschine verschiedene Spritzgussformen vorgehalten werden, um eine entsprechende Ausrichtung des Ventileinsatzes für den Spritzvorgang ermöglichen. Ferner können erfindungsgemäß für verschiedene Einspritzventile verschiedener Hersteller jeweils die gleichen Ventileinsätze 2 verwendet werden, die jeweils individuell in den verschiedenen Spritzgussformen mittels der ersten Ausrichteinrichtung 5 ausgerichtet werden.

## Patentansprüche

1. Einspritzventil, umfassend
- einen Ventileinsatz (2) und
- eine Steckerumspritzung (7),
- wobei der Ventileinsatz (2) einen Ventilsitz (3) und ein Ventilgehäuse (4) umfasst und das Ventilgehäuse (4) eine erste Ausrichteinrichtung (5) aufweist, welche eingerichtet ist, den Ventileinsatz in einem Spritzwerkzeug auszurichten, und
- wobei die Kunststoffumspritzung (7) eine zweite Ausrichteinrichtung (8) aufweist, welche eingerichtet ist, das Einspritzventil bei einer Montage in einer Brennkraftmaschine auszurichten.

2. Einspritzventil nach Anspruch 1, **dadurch gekennzeichnet, dass** die erste Ausrichteinrichtung (5) an einem Endbereich des Ventileinsatzes (2) benachbart zum Ventilsitz (3) angeordnet ist.

3. Einspritzventil nach einem der vorhergehenden Ansprüche, **dadurch gekennzeichnet, dass** die erste Ausrichteinrichtung (5) wenigstens eine erste Fläche (6a) und eine zweite Fläche (6b) aufweist.

4. Einspritzventil nach Anspruch 3, **dadurch gekennzeichnet, dass** die erste Fläche (6a) zur zweiten Fläche (6b) parallel angeordnet ist.

5. Einspritzventil nach Anspruch 3, **dadurch gekennzeichnet, dass** die erste Fläche (6a) zur zweiten Fläche (6b) in einem Winkel (α) ausgerichtet ist.

6. Einspritzventil nach Anspruch 5, **dadurch gekennzeichnet, dass** die erste Fläche (6a) und die zweite Fläche (6b) zwischen sich eine Übergangskante (9) aufweisen.

7. Einspritzventil nach einem der vorhergehenden Ansprüche, **dadurch gekennzeichnet, dass** die zweite Ausrichteinrichtung (8) eine Fläche umfasst.

8. Verfahren zur Herstellung eines Einspritzventils (1), umfassend die Schritte:
- Bereitstellen eines Ventileinsatzes (2) mit einer ersten Ausrichteinrichtung (5) zum Ausrichten des Ventileinsatzes,
- Einführen des Ventileinsatzes (2) in ein Spritzwerkzeug, wobei der Ventileinsatz (2) mittels der ersten Ausrichteinrichtung (5) im Spritzwerkzeug ausgerichtet wird, und
- Umspritzen des Ventileinsatzes (2) mit Kunststoff zur Herstellung einer Kunststoffumspritzung (7) derart, dass die Kunststoffumspritzung (7) eine zweite Ausrichteinrichtung (8) aufweist, mittels welcher das Einspritzventil bei einer Montage in einer Brennkraftmaschine ausgerichtet wird.

9. Verfahren nach Anspruch 8, **dadurch gekennzeichnet, dass** die erste Ausrichteinrichtung (5) wenigstens eine erste Fläche (6a) und eine zweite Fläche (6b) aufweist und/oder dass die zweite Ausrichteinrichtung (8) eine Fläche umfasst.

10. Verfahren nach einem der Ansprüche 8 oder 9, **dadurch gekennzeichnet, dass** die erste Ausrichteinrichtung (5) an einem Endbereich des Ventileinsatzes (2) benachbart zu einem Ventilsitz (3) angeordnet ist.

## Claims

1. Injection valve, comprising
- a valve insert (2) and
- a plug connector overmoulding (7),
- wherein the valve insert (2) comprises a valve seat (3) and a valve housing (4), and the valve housing (4) has a first orientation device (5) which is designed for orientation of the valve insert in an injection-moulding tool, and
- wherein the plastics overmoulding (7) has a second orientation device (8) which is designed for orientation of the injection valve during installation in an internal combustion engine.

2. Injection valve according to Claim 1, **characterized in that** the first orientation device (5) is arranged on an end region of the valve insert (2), adjacent to the valve seat (3).

3. Injection valve according to one of the preceding claims, **characterized in that** the first orientation device (5) has at least a first surface (6a) and a second surface (6b).

4. Injection valve according to Claim 3, **characterized in that** the first surface (6a) is arranged parallel to the second surface (6b).

5. Injection valve according to Claim 3, **characterized in that** the first surface (6a) is oriented at an angle (α) relative to the second surface (6b).

6. Injection valve according to Claim 5, **characterized in that** the first surface (6a) and the second surface (6b) have a transition edge (9) between them.

7. Injection valve according to one of the preceding claims, **characterized in that** the second orientation device (8) comprises a surface.

8. Method for producing an injection valve (1), comprising the steps:
- providing a valve insert (2) having a first orientation device (5) for the orientation of the valve insert,
- inserting the valve insert (2) into an injection-moulding tool, wherein the valve insert (2) is oriented in the injection-moulding tool by way of the first orientation device (5), and
- overmoulding the valve insert (2) with plastic in order to produce a plastics overmoulding (7), such that the plastics overmoulding (7) has a second orientation device (8) by way of which the injection valve is oriented during installation in an internal combustion engine.

9. Method according to Claim 8, **characterized in that** the first orientation device (5) has at least a first surface (6a) and a second surface (6b), and/or **in that** the second orientation device (8) comprises a surface.

10. Method according to either of Claims 8 and 9, **characterized in that** the first orientation device (5) is arranged on an end region of the valve insert (2), adjacent to a valve seat (3).

## Revendications

1. Soupape d'injection, comprenant :
- un insert de soupape (2) et
- un surmoulage d'enfichage (7),
- l'insert de soupape (2) comprenant un siège de soupape (3) et un boîtier de soupape (4) et le boîtier de soupape (4) présentant un premier dispositif d'alignement (5) qui est prévu pour aligner l'insert de soupape dans un outil d'injection, et
- le surmoulage en plastique (7) présentant un deuxième dispositif d'alignement (8) qui est prévu pour aligner la soupape d'injection dans le cas d'un montage dans un moteur à combustion interne.

2. Soupape d'injection selon la revendication 1, **caractérisée en ce que** le premier dispositif d'alignement (5) est disposé au niveau d'une région d'extrémité de l'insert de soupape (2) adjacente au siège de soupape (3).

3. Soupape d'injection selon l'une quelconque des revendications précédentes, **caractérisée en ce que** le premier dispositif d'alignement (5) présente au moins une première surface (6a) et une deuxième surface (6b).

4. Soupape d'injection selon la revendication 3, **caractérisée en ce que** la première surface (6a) est disposée parallèlement à la deuxième surface (6b).

5. Soupape d'injection selon la revendication 3, **caractérisée en ce que** la première surface (6a) est orientée suivant un certain angle (α) par rapport à la deuxième surface (6b).

6. Soupape d'injection selon la revendication 5, **caractérisée en ce que** la première surface (6a) et la deuxième surface (6b) présentent entre elles une arête de transition (9).

7. Soupape d'injection selon l'une quelconque des revendications précédentes, **caractérisée en ce que** le deuxième dispositif d'alignement (8) comprend une surface.

8. Procédé de fabrication d'une soupape d'injection (1), comprenant les étapes suivantes :
- fourniture d'un insert de soupape (2) avec un premier dispositif d'alignement (5) pour aligner l'insert de soupape,
- introduction d'un insert de soupape (2) dans un outil d'injection, l'insert de soupape (2) étant aligné dans l'outil d'injection au moyen du premier dispositif d'alignement (5), et
- surmoulage l'insert de soupape (2) avec du plastique pour fabriquer un surmoulage en plastique (7) de telle sorte que le surmoulage en plastique (7) présente un deuxième dispositif d'alignement (8) au moyen duquel la soupape d'injection est alignée lors d'un montage dans un moteur à combustion interne.

9. Procédé selon la revendication 8, **caractérisé en ce que** le premier dispositif d'alignement (5) présente au moins une première surface (6a) et une deuxième surface (6b) et/ou **en ce que** le deuxième dispositif d'alignement (8) comprend une surface.

10. Procédé selon l'une quelconque des revendications 8 ou 9, **caractérisé en ce que** le premier dispositif d'alignement (5) est disposé au niveau d'une région d'extrémité de l'insert de soupape (2) à côté d'un siège de soupape (3).
